Europäisches Patentamt

European Patent Office

Office européen des brevets

(19)

(11) **EP 0 823 617 A2**

(12) **EUROPEAN PATENT APPLICATION**

(43) Date of publication:
**11.02.1998 Bulletin 1998/07**

(51) Int Cl.$^6$: **G01D 3/02**

(21) Application number: **97305821.7**

(22) Date of filing: **01.08.1997**

(84) Designated Contracting States:
**AT BE CH DE DK ES FI FR GB GR IE IT LI LU MC
NL PT SE**

(30) Priority: **05.08.1996 US 692141**

(71) Applicant: **Hewlett-Packard Company
Palo Alto, California 94304 (US)**

(72) Inventor: **Eidson, John C.
Palo Alto, California 94303 (US)**

(74) Representative: **Molyneaux, Martyn William et al
Langner Parry
52-54 High Holborn
London WC1V 6RR (GB)**

(54) **Auto-ranging and other complex transducer corrections**

(57)     The method of the present invention uses general calibration correction techniques present in transducer host (12) systems to implement more complex functions such as derived values and corrections based on measurable or configurable factors. These correction techniques make use of general correction engines in a host (12) and correction factors which remain with a multi-channel transducer unit (14) that is connected to the host (12) via a digital interface (16). This invention uses these mechanisms, along with appropriate changes in the way transducer control and signal conditioning circuitry is designed, to implement and correct more complex transducers by assigning a control signal or complex computation to one or more of the channels.

Figure 2

**Description**

Field of the Invention

The invention pertains generally to the calibration and integration of transducers into measurement and control devices such as instruments and networked devices that require relatively complex corrections for proper calibration.

BACKGROUND OF THE INVENTION

Sensors and actuators, *i.e.* transducers, require correction to their output or input signals to properly represent these signals in a linearized digital representation in the appropriate units. This is true whether the transducer is a part of a host device such as an instrument, a hand held device, a networked device, or is embedded in some other system. The correction factors used are determined by a process known as calibration. Typically, the results of this calibration are maintained in the instrument or other host device. Typically, these correction factors are entered into the host device by the calibration apparatus, over a network, via a floppy disc, or in some cases by hand.

This works well when the relationship between the host device and the transducer is fixed, for example where an instrument always uses the same transducer. In many current applications, there is no fixed relationship. For many data acquisition devices, a few instruments, and a growing number of networked devices, the transducer is not a permanent part of the host. This introduces a consistency problem in maintaining the proper set of correction factors in the host for the transducer currently in use.

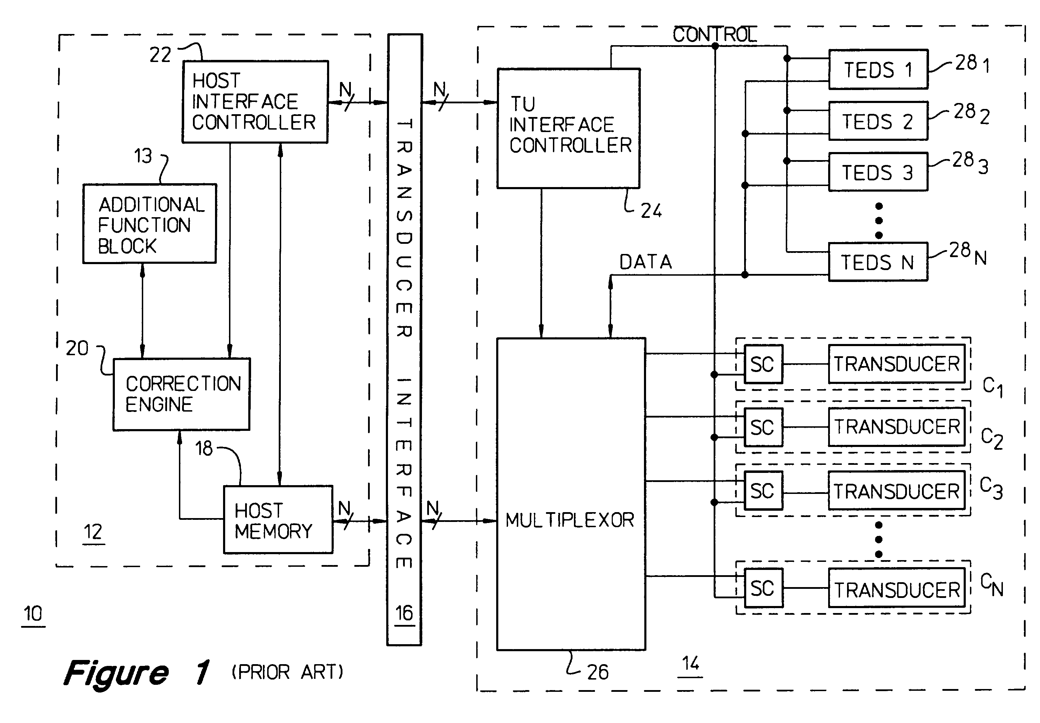

A few transducers are beginning to appear where these correction factors are maintained in electronic form with the transducer itself. In operation, these factors are then "uploaded" into the host. Figure 1 illustrates a prior art example of a block diagram for an N-channel multi-transducer system as described in transducer standard IEEE-P1451.2. For each channel, a transducer description exclusively characterizes the behavior and operation of the transducer connected to the channel. In general, this works well for simple transducers and correction schemes. However, for more complex transducers or correction schemes such as auto-ranging, differential, or product information that require multiple parametric information, the correction is either implemented using a microprocessor on the transducer side of the interface or requires custom code or scripts to be executed in the host engine.

A method that permits a general correction engine in the host to perform the correction processes for complex transducers in response to commands transferred from the transducer unit to the host on power-up would be desirable.

SUMMARY OF THE INVENTION

The method of the present invention uses general calibration correction techniques present in transducer host systems to implement more complex functions such as derived values and corrections based on measurable or configurable factors. These correction techniques make use of general correction engines in a host and correction factors which remain with a multi-channel transducer unit that is connected to the host via a digital interface. This invention uses these mechanisms, along with appropriate changes in the way transducer control and signal conditioning circuitry is designed, to implement and correct more complex transducers by assigning a control signal or complex computation to one or more of the channels.

BRIEF DESCRIPTION OF THE DRAWINGS

Figure 1 illustrates a prior art multi-transducer system.
Figure 2 illustrates a block diagram of an N channel multi-transducer system.
Figure 3 is a transition state diagram that illustrates one way of uploading the correction factors and managing the correction of the actual transducer data.
Figure 4 illustrates the nature of the correction factors by means of an example in two dimensions.
Figure 5 illustrates the general correction scheme described in Figure 1 modified according to the present invention.
Figure 6 illustrates the present invention as applied to the auto-ranging measurement of a sensor.
Figure 7 illustrates the method as applied to complex computations.
Figure 8 illustrates the method as a means for correction based on a measured configuration of either the transducer unit or connectivity of the transducer.

DETAILED DESCRIPTION OF THE PREFERRED EMBODIMENTS

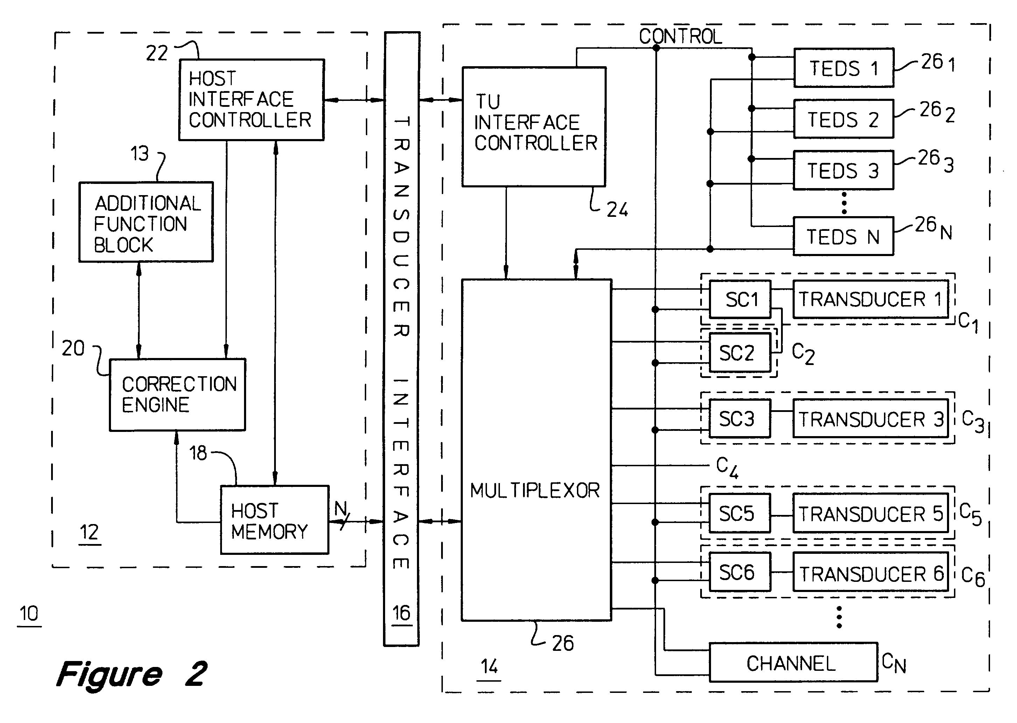

Figure 2 illustrates a block diagram of an N channel multi-transducer system 10. The transducer standard P1451.2 has been adapted to provide an illustrative example of the present invention. A host 12 and a transducer unit 14 are connected through a transducer interface 16. The host 12 includes a host memory 18 for storing the correction factors and configuration data that is uploaded from the transducer unit 14 and an optional additional function block 13. The host 12 includes a correction engine 20 which uses the correction factors to correct the raw transducer signals present at the transducer interface 16 into or from an appropriate representation used by the additional function block 13, *e.g.* a representation in SI units. The additional function block 13 represents the primary host functions such as network interface, display, *etc.* The host 12 further includes a host interface controller 22 for managing the transducer interface 16 and the correction engine 20.

The transducer unit 14 includes a transducer unit (TU) interface controller 24 connected to a multiplexor 26 and a series of electronic data sheets (TEDs) $28_1$, $28_2$, $28_3$, . . . $28_N$. The (TU) interface controller 24 is also connected to N channels $C_1$, $C_2$, $C_3$, . . . ,$C_N$. The multiplexor 26 is further connected to the N channels $C_1$, $C_2$, $C_3$, . . . ,$C_N$. The channels may contain actual transducers, such as sensors or actuators, or virtual transducers that represent a derived function or property of another channel.

The electronic data sheet (TEDs) $28_1$, $28_2$, $28_3$, . . . $28_N$ in the transducer unit 14 contains descriptive information about a corresponding channel. In particular, this information includes the correction factors and configuration parameters. For each channel, the configuration parameters may include the specification of which other channels are required to perform for a given function and other information needed by the correction engine of the host. The information in the TEDs $28_1$, $28_2$, $28_3$, ... $28_n$ is uploaded from the transducer unit 14 into the host unit 12 at initialization under the control of the TU interface controller 24 and multiplexor 26.

The multiplexor 26 also manages the transport of the digitized signals associated with each channel to and/or from the transducer interface 16. For actuators, driving data is presented to the correction engine by the additional function block 13, *e.g.* as SI value 1 if transducer 1 is an actuator. The driving data is corrected by the correction engine and the resulting operational signal is sent via the transducer interface and the appropriate channel to the signal conditioning circuitry preceding the actuator in the channel. For a sensor, driving data originating in the signal conditioning circuitry connected to the sensor in the channel is transported via the channel and the transducer interface to the correction engine for correction. The host correction engine delivers the resulting operational signal to the rest of the host system as corrected SI, or other another representative unit value.

$C_1$ is an example of a channel that includes an actual transducer. This channel contains a transducer, such as a sensor or an actuator and may also contain signal conditioning circuitry SC. For sensors, the signal conditioning circuitry preferably uses an A/D converter, while for actuators, a D/A converter is preferably used. For digital transducers, a signal converter is unnecessary. The signals passing between the channels and the transducer interface 16 are multiplexed by the multiplexor 26. The signal conditioning circuitry SC1 of $C_1$ is further connected to $C_2$. $C_2$ illustrates a channel that includes a virtual transducer. $C_2$ contains signal conditioning circuitry that affects the operation of $C_1$.

$C_3$ is a second example of a channel that includes an actual transducer. The signal conditioning circuitry SC3 is not influenced by another channel. $C_4$ illustrates a second example of a channel having a virtual transducer. In this $C_4$ embodiment, no signal conditioning circuitry is needed because the virtual transducer represents a property of another channel, $C_3$ in this example.

Similar to $C_1$, $C_5$ and $C_6$ are examples of channels that include actual transducers. The signal conditioning circuitry SC5 of $C_5$ is connected to the signal conditioning circuitry SC6 of $C_6$. The signal conditioning circuitry SC5 and SC6 have an interdependent relationship.

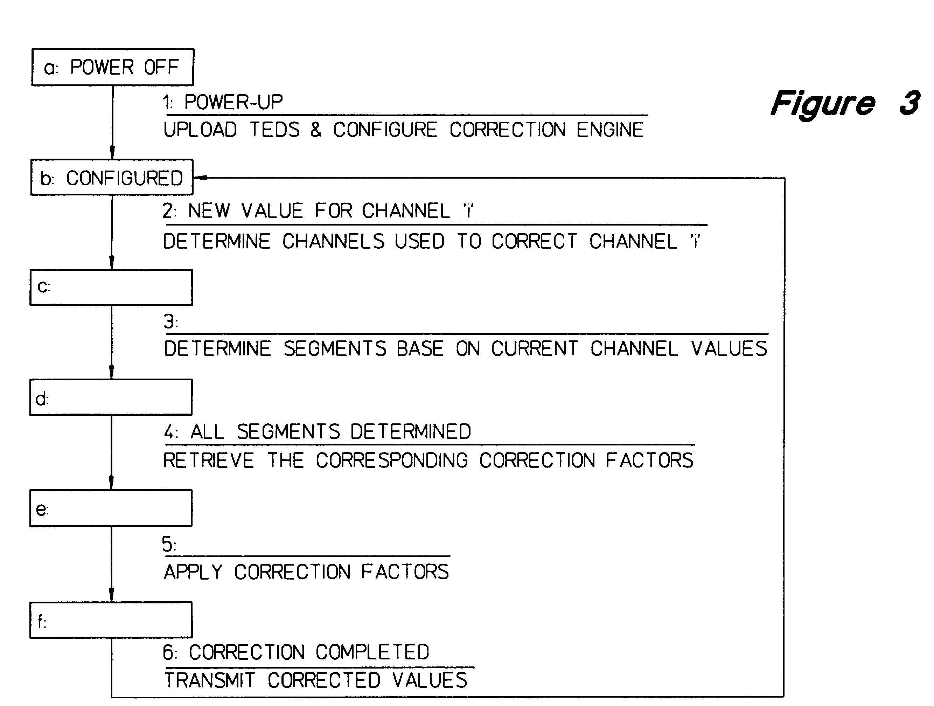

Figure 3 is a transition state diagram that illustrates one way of uploading the descriptive information and managing the correction of the transducer data. State "a" is the power off state. When the power is turned on, the contents of the TEDS are uploaded into the host memory 18 and the correction engine is configured, transition "1". This brings the host into a configured state "b". When a new value is presented, transition "2", either by a sensor to the correction engine or by the host to the correction engine ultimately for delivery to an actuator, the correction engine determines which of the channels is involved in the correction function from the descriptive information. Alternatively, this determination may be made after the descriptive information has been loaded. When this determination has been made, the system is in state "c". Transition "3" is automatic and involves the determination of the particular segments of the calibration space for each of the channels involved and leads to state "d". Transition "4" is automatic and involves retrieving from the host memory the correction factors for the channels and segments involved thus leading to state "e". Transition "5" is automatic and involves the application of the retrieved correction factors to the relevant channels resulting in a corrected value being present in state "f". Transition "6" is automatic and involves the transmission of the corrected value to either the host if the channel is an actuator or the transducer interface if a sensor and ultimately returns to state "b" to await another new signal appearance.

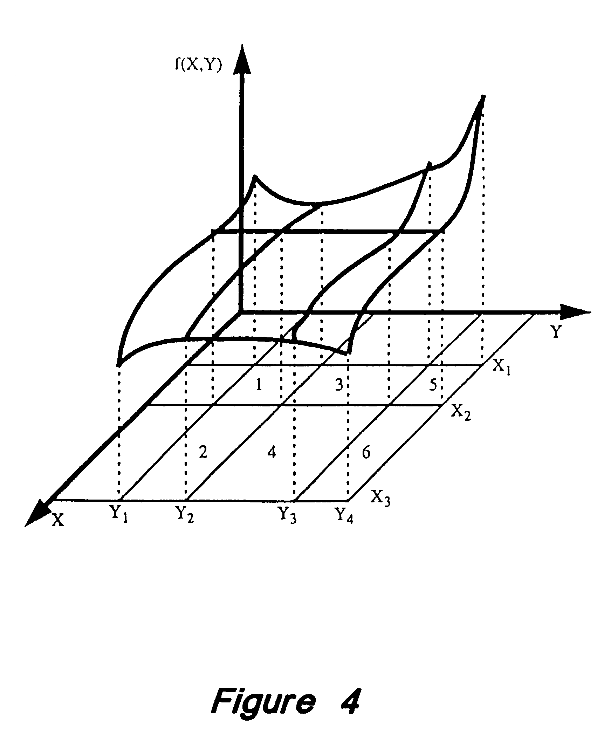

Figure 4 illustrates the nature of the correction factors by means of an example using two channels, each having an actual transducer. One channel includes a pH sensor probe and the other channel includes a temperature sensor. The concept is easily extendible to additional dimensions.

In Figure 4, the X-axis corresponds to the raw digitized signal from the pH sensor probe while the Y-axis corresponds to the raw digitized signal from a temperature sensor. The function $f(X,Y)$ represents the temperature corrected value of pH for a given value of raw sensor readings. The Cartesian space is segmented into patches, such as rectangles. Note that for a one dimensional correction, the patch would be a linear segment and for a three dimensional correction, the patch would be a parallelepiped. Transition "3" of Figure 3 results in determining exactly in which of these patches the current values of the signals lie. For each patch, there is a set of correction factors which approximates the correction function as a multi-nomial such as a truncated Taylor series in each of the variables X and Y. This set of correction factors allows the general correction engine of the host to correct the transducer values for linearization or to remove the effects of other variables such as temperature, position, *etc.*

In illustration, the descriptive information for the pH sensor probe of Figure 4 may be shown as follows:

Table 1:

| Correction Factors for Channel 1 | | | |
|---|---|---|---|
| X Range | Y Range | Patch # | Correction Factors |
| $X_1 < X \leq X_2$ | $Y_1 < Y \leq Y_2$ | 1 | $A_{00}, A_{10}, A_{20}, A_{01}, A_{11}, A_{21}$ |
| $X_1 < X \leq X_2$ | $Y_2 < Y \leq Y_3$ | 3 | $B_{00}, B_{10}, B_{20}, B_{01}, B_{11}, B_{21}$ |
| $X_1 < X \leq X_2$ | $Y_3 < Y \leq Y_4$ | 5 | $C_{00}, C_{10}, C_{20}, C_{01}, C_{11}, C_{21}$ |
| $X_2 < X \leq X_3$ | $Y_1 < Y \leq Y_2$ | 2 | $D_{00}, D_{10}, D_{20}, D_{01}, D_{11}, D_{21}$ |
| $X_2 < X \leq X_3$ | $Y_2 < Y \leq Y_3$ | 4 | $E_{00}, E_{10}, E_{20}, E_{01}, E_{11}, E_{21}$ |
| $X_2 < X \leq X_3$ | $Y_3 < Y \leq Y_4$ | 6 | $F_{00}, F_{10}, F_{20}, F_{01}, F_{11}, F_{21}$ |

If the values of X and Y are in patch 1, the corrected value for Channel 1 is computed as follows:

$$f(X,Y) = A_{00} + A_{10}(X \text{-} X_1) + A_{20}(X \text{-} X_1)^2 + A_{01}(Y \text{-} Y_1) + A_{11}(X \text{-} X_1)(Y \text{-} Y_1) + A_{21}(X \text{-} X_1)^2(Y \text{-} Y_1)$$

In this example, the multi-nomial is quadratic in X and linear in Y. The offset of the Taylor series is the lower bound of the patch. Alternatively, the mid-point, the upper bound, or some arbitrary value could have been selected. The selection is made by either convention for the system or as another correction factor value in the TEDs, such as the offset for each channel associated with each patch.

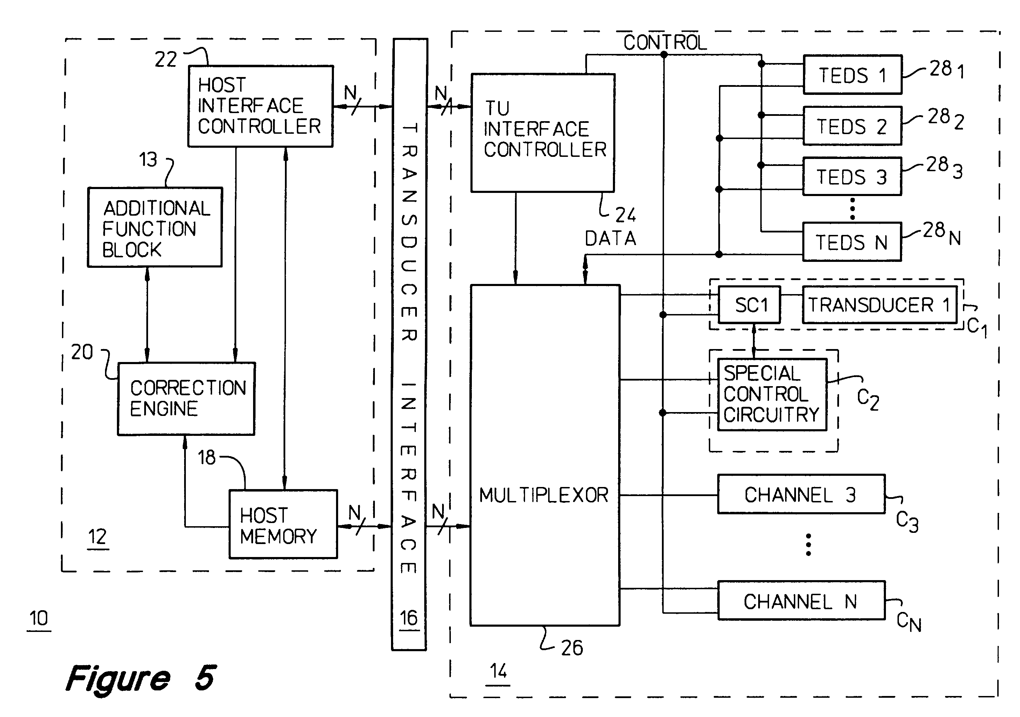

Figure 5 illustrates an example of the present invention as a general correction scheme. One or more of the nominal transducer channels is appropriated as a channel having a virtual transducer for a purpose other than providing access to an actual transducer. Channel 2 represents either a state variable associated with the control of one or more channels or is used for complex computations. In this example, channel 2 $C_2$ is used to control channel 1 $C_1$. Although the data format of transducer standard IEEE-P1451.2 is used for the descriptive information for the appropriated channel $C_2$, the actual values of many of the fields such as the correction factors, units, *etc.* are different in the present invention. It will be understood that more than one appropriated channel may be used in a given transducer unit. In operation, the correction factors associated with the appropriated channel cause the general correction engine of the host device to perform a more complex functionality.

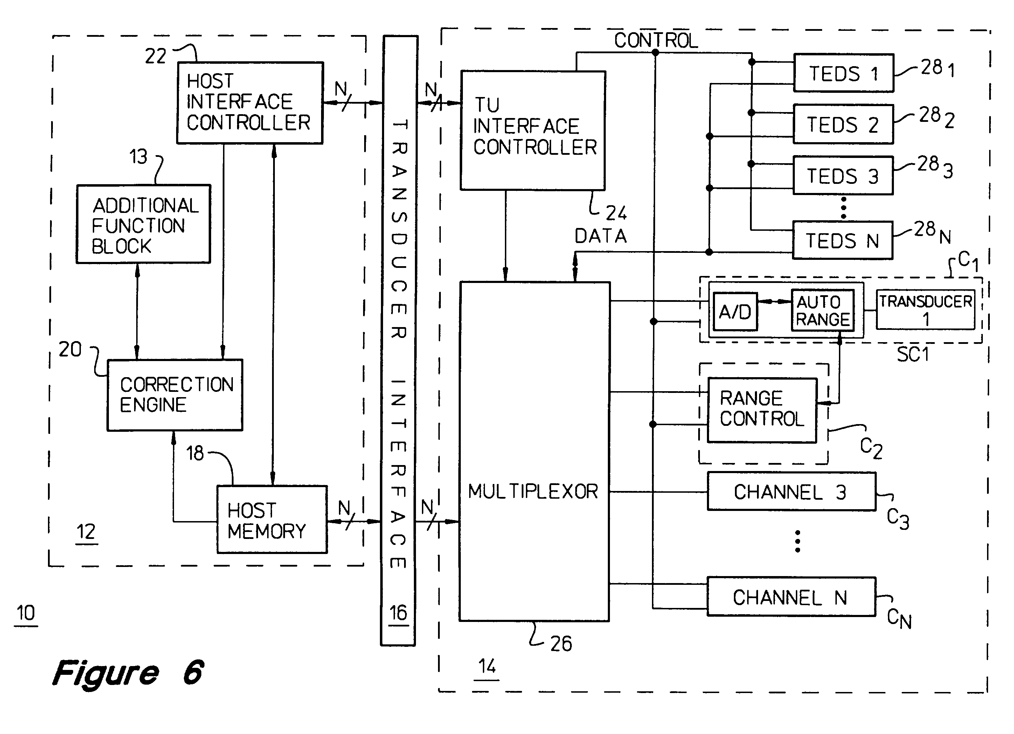

Figure 6 illustrates an example of the present invention as applied to the auto-ranging measurement of a sensor. The signal conditioning circuitry of channel 1 includes switches in the analog circuitry that permit the signal gain to be adjusted to present the signal to the A/D converter in a selected range. These switches are selected by the auto-range control based on the values of the analog signals. When the auto-range process has stabilized the auto-range control, a state variable that represents the range is used by the correction engine. In this case as in Figure 4, the X value corresponds to the sensor of Channel 1, while the Y value corresponds to the auto-range state value on Channel 2. This state value is an integer that falls in one of the indicated ranges along the Y-axis. For example, patches 1 and 2 correspond to the lowest range while patches 5 and 6 correspond to the highest range. The sensor channel and its associated correction factors appear as follows:

Table 2:

| Correction Factors for Channel 1 | | | |
|---|---|---|---|
| X Range | Y Range | Patch # | Correction Factors |
| $X_1 < X \leq X_2$ | $Y_1 < Y \leq Y_2$ | 1 | $A_{00}, A_{10}, A_{20}$ |
| $X_1 < X \leq X_2$ | $Y_2 < Y \leq Y_3$ | 3 | $B_{00}, B_{10}, B_{20}$ |

Table 2:   (continued)

| Correction Factors for Channel 1 | | | |
|---|---|---|---|
| X Range | Y Range | Patch # | Correction Factors |
| $X_1 < X \leq X_2$ | $Y_3 < Y \leq Y_4$ | 5 | $C_{00}, C_{10}, C_{20}$ |
| $X_2 < X \leq X_3$ | $Y_1 < Y \leq Y_2$ | 2 | $D_{00}, D_{10}, D_{20}$ |
| $X_2 < X \leq X_3$ | $Y_2 < Y \leq Y_3$ | 4 | $E_{00}, E_{10}, E_{20}$ |
| $X_2 < X \leq X_3$ | $Y_3 < Y \leq Y_4$ | 6 | $F_{00}, F_{10}, F_{20}$ |

If the values for X and Y are within patch 1, then the corrected value for Channel 1 is:

$$f(X,Y) = A_{00} + A_{10}(X - X_1) + A_{20}(X - X_1)^2$$

The multi-nomial is quadratic in X and zero order in Y. The only correction function of the auto-range state variable of channel 2, the Y channel, is in the selection of the patch. The differences in the correction factors reflect the differences in the non-linearity as well as the gain for each of the ranges.

Alternatively, the range may be selected by the host by treating channel 2 as an actuator and replacing the auto-range control with a control responding to the actuator value on channel 2. The correction process applied to channel 1 would be identical.

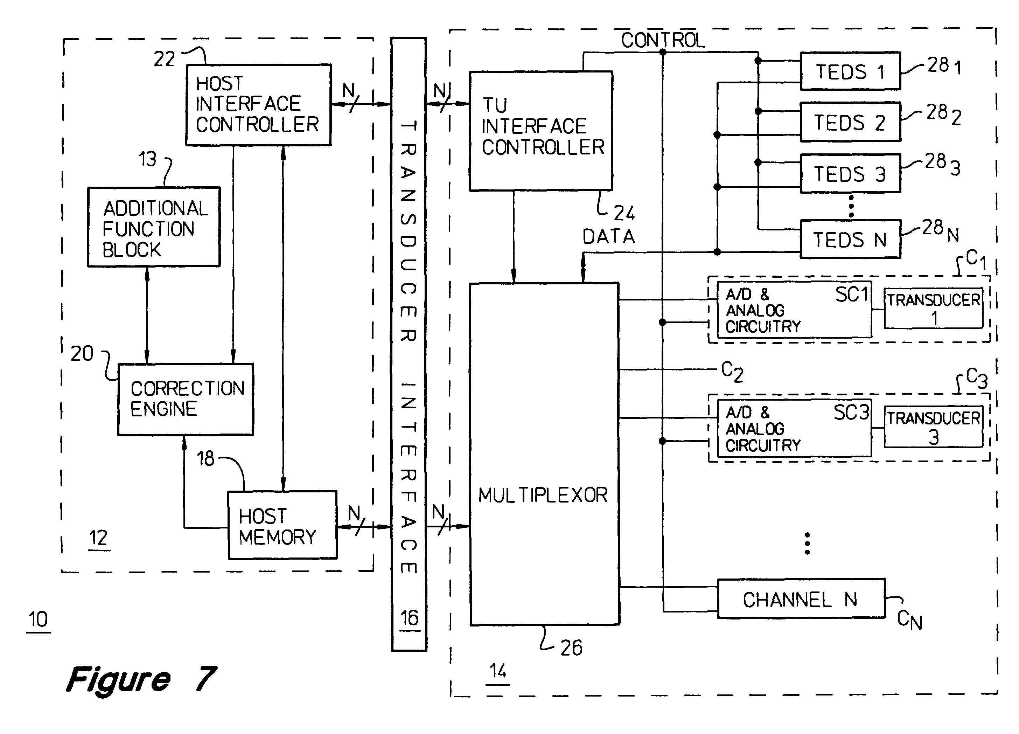

Figure 7 illustrates the method as applied to complex computations. In this example, power is determined from values generated by a voltage sensor as the transducer of channel 1 and a current sensor as the transducer of channel 3. The raw data from these sensors will be multiplied to generate raw data representing power on channel 2. A single correction will be applied to convert this raw data into appropriate SI or other units of power. The TEDS for channel 2 is used to define the correction factors for correcting the raw data representing power. There is no circuitry needed for channel 2. The correction factors for $C_2$ are specified such that $C_2$ virtually appears as a power sensor. The correction factors for $C_2$ are applied to the raw data resulting from multiplying the raw data generated by the sensors in both $C_1$ and $C_3$. For a single segment of $C_1$ and $C_3$, the value of $C_2$ is a function of $C_2$ $(C_1, C_3) = A_{101} * (C_1) * (C_3)$, where the correction coefficient $A_{101} = 1$ for the appropriate units. The host correction engine will generate the power value for $C_2$.

Alternatively, the virtual channel may represent a property of another channel. In illustration, if channel 1 represents a sensor then channel 2 may be appropriated to represent a property of channel 1 such as measurement accuracy. If the accuracy varies with the measured sensor value, then the corrections defined in the TEDs for channel 2 may be selected so that channel 2 may present the value of the accuracy for the measured sensor value.

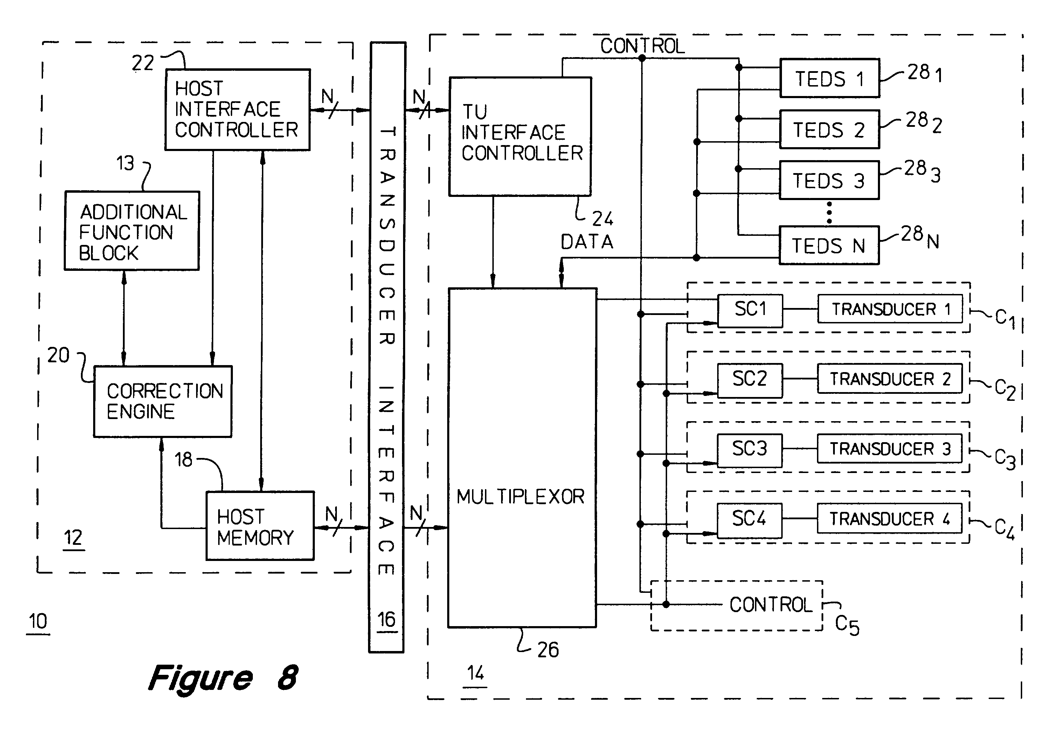

Figure 8 illustrates the method used for correction based on a measured configuration of the way in which the transducers of the channels are connected. For example, in three phase power measurements, the voltage pattern measurement depends upon the power line configuration, WYE or DELTA. The transducers of channels $C_1$ to $C_4$ are voltage sensors. The configuration control circuitry of channel $C_5$ monitors the channels, $C_1$ to $C_4$ to describe the power line configuration as a configuration state variable. This configuration state variable may then be used to control the correction applied to any computation or calibration dependent on the power line configuration.

Although the present invention has been described with respect to the general system shown in Figure 2, the method is extendible to any transducer-host system having a standard digital interface that connects the transducer units to and from host units. Although the efficiency of the host 12 may be improved by describing the descriptive information for each channel in patches as illustrated in Figures 3 - 8, the descriptive information need not be modular in description.

## Claims

1.  A multi-transducer system comprising:

   an interface (16);
   a transducer unit (14), connected to the interface (16), including,
   a first and a second transducer channels ($C_1, C_2, ..., C_N$) being operative to transceive signals,
   a transducer interface controller (24),
   a multiplexor (26), connected to the first and second transducer channels and the transducer interface controller (24), and

a first transducer description ($28_1$), connected to the multiplexor, including correction factors and configuration parameters that correspond to the first transducer channel ($C_1$); and

host means (12), connected to the interface (16), for generating a first operational signal for the first transducer channel by applying the first transducer description ($28_1$) to a signal corresponding to the second transducer channel.

2. A multi-transducer system, as defined in claim 1, wherein:

the first transducer channel ($C_1$) includes a first signal conditioning circuit ($SC_1$) connected to a transducer; and the second transducer channel ($C_4$) includes a virtual transducer.

3. A multi-transducer system, as defined in claims 1 or 2, wherein the second transducer channel ($C_2$) further includes a second signal conditioning circuit ($SC_2$), and the virtual transducer represents a derived function of the first transducer channel.

4. A multi-transducer system, as defined in claims 1, 2, or 3 wherein the second transducer channel ($C_2$) further includes a second signal conditioning circuit ($SC_2$), and the virtual transducer represents a control function of the first transducer channel.

5. A multi-transducer system, as defined in claims 1 or 2, wherein the virtual transducer represents a property of the first transducer channel.

6. A multi-transducer system, as defined in claim 5, wherein:

the multi-transducer system further comprises a second transducer description ($28_2$) that corresponds to the second transducer channel, and

the host unit means (12) is additionally for generating a second operation signal for the second transducer channel by applying the second transducer description, the second operation signal being dependent upon the first transducer channel.

7. A method of controlling a transducer comprising the steps of:

loading a transducer definition that corresponds to a first transducer channel to a host correction engine, wherein the transducer definition includes correction factors and configuration parameters;

receiving a signal that requires correction, wherein the signal corresponds to a second transducer channel; and

using the host correction engine to generate corrected signal values that correspond to the first transducer channel by applying the transducer definition to the signal corresponding to the second transducer channel.

8. A method of controlling a transducer, as defined in claim 7, wherein the signal corresponding to the first transducer channel represents a state variable of control circuitry associated with the first transducer channel which interacts with signal conditioning circuitry associated with the second transducer channel.

9. A method of controlling a transducer, as defined in claim 8, wherein the state variable associated with the first transducer channel corresponds to channel gain, channel bandwidth, signal conditioning state, or sampling rate.

10. A method of controlling a transducer, as defined in any one of claims 7-9, wherein the step of using the host engine to generate corrected signal values includes the step of generating the automatic computation of complex functions of the second transducer channel and at least one additional transducer channel.

11. A method of controlling a transducer, as defined in claim 10, wherein the first transducer channel represents power, mass flow, mechanical energy, electrical energy, surface resistivity, or a complex computation.

12. A method of controlling a transducer, as defined in any one of claims 7-11, wherein the step of using the correction engine (5) to generate corrected values includes the step of providing supplementary information regarding the second transducer channel via the first transducer channel.

13. A method of controlling a transducer, as defined in claim 12, wherein the first transducer channel represents accuracy, precision, statistical measurement, or a complex computation.

14. A method for controlling a transducer, as defined in any one of claims 7-13, further including the steps of:

monitoring the first, second, and a plurality of transducer channels;
representing on a third transducer channel the configuration of the first, second, and the plurality of transducer channels, wherein the third transducer channel has a transducer description that includes correction factors and configuration parameters; and
applying the transducer description of the third transducer channel according to the configuration of the first, second, and a plurality of transducer channels.

15. A method for controlling a transducer, as defined in claim 14, wherein the step of representing on a third transducer channel the configuration of the first, second, and plurality of transducer channels includes the steps of:

detecting a power connection; and
applying the transducer description of the third transducer channel according to the power connection.

16. A method for controlling a transducer, as defined in any one of claims 7-15, wherein the transducer description describes the correction factors and configuration parameters according to segments of operation, and the step of the using the host engine to generate corrected values includes a step of selecting one of the segments of operation according to the signal corresponding to the second transducer channel.

**Figure 1** (PRIOR ART)

EP 0 823 617 A2

Figure 2

## Figure 3

a: POWER OFF

1: POWER-UP
UPLOAD TEDS & CONFIGURE CORRECTION ENGINE

b: CONFIGURED

2: NEW VALUE FOR CHANNEL "i"
DETERMINE CHANNELS USED TO CORRECT CHANNEL "i"

c:

3:
DETERMINE SEGMENTS BASE ON CURRENT CHANNEL VALUES

d:

4: ALL SEGMENTS DETERMINED
RETRIEVE THE CORRESPONDING CORRECTION FACTORS

e:

5:
APPLY CORRECTION FACTORS

f:

6: CORRECTION COMPLETED
TRANSMIT CORRECTED VALUES

**Figure 4**

Figure 5

EP 0 823 617 A2

*Figure 6*

*Figure 7*

Figure 8

EP 0 823 617 A2